# EUROPEAN PATENT SPECIFICATION

(11) **EP 1 697 045 B1**
(45) Date of publication and mention of the grant of the patent: **29.08.2018**
(21) Application number: 04755294.8
(22) Date of filing: 14.06.2004
(51) Int. Cl.: B01J 35/00, B01J 23/52, A61L 9/20, B01D 53/86

(54) **AIR PURIFICATION SYSTEM COMPRISING GOLD/TITANIUM DIOXIDE PHOTOCATALYST**
LUFTREINIGUNGSSYSTEM MIT GOLD /TITANDIOXID-PHOTOKATALYSATOR
SYSTEME D'EPURATION D'AIR COMPORTANT PHOTOCATALYSEUR D'OR/OXYDE DE TITANE

(30) Priority: 19.06.2003 US 465025
(43) Date of publication of application: 06.09.2006
(73) Proprietor: CARRIER CORPORATION, Farmington, Connecticut 06034-4015 (US)
(72) Inventor: WEI, Di, Ellington, Connecticut 06029 (US); VANDERSPURT, Thomas, H., Glastonbury, CT 06033 (US); OBEE, Timothy, N., South Windsor, CT 06074 (US); HAY, Stephen, O., South Windsor, CT 06074 (US); SCHMIDT, Wayde, R., Pomfret center, CT 06259 (US)
(74) Representative: Dehns
(86) International application number: PCT/US2004/019019
(87) International publication number: WO 2004/112958

(56) References cited:
- US-A- 5 564 065
- US-A- 6 121 191
- US-A1- 2002 094 298
- DATABASE WPI Section Ch, Week 199019 Derwent Publications Ltd., London, GB; Class D22, AN 1990-144262 XP002298155 & JP 02 090924 A (MATSUSHITA ELEC IND CO LTD) 30 March 1990 (1990-03-30)
- PATENT ABSTRACTS OF JAPAN vol. 1999, no. 14, 22 December 1999 (1999-12-22) & JP 11 253818 A (TOYOTA MOTOR CORP), 21 September 1999 (1999-09-21) -& DATABASE WPI Section Ch, Week 199950 Derwent Publications Ltd., London, GB; Class D22, AN 1999-584216 XP002298156 -& JP 11 253818 A (TOYOTA JIDOSHA KK) 21 September 1999 (1999-09-21)

## Description

### BACKGROUND OF THE INVENTION

The present invention relates generally to an air purification system comprising a gold/titanium dioxide photocatalyst/thermocatalyst coating having nano-sized gold particles that oxidizes gaseous contaminants, including volatile organic compounds and carbon monoxide, that adsorb onto the surface to form carbon dioxide, water, and other substances.

Indoor air can include trace amounts of contaminants, including carbon monoxide and volatile organic compounds such as formaldehyde, acetaldehyde, toluene, propanal and butene. Absorbent air filters, such as activated carbon, have been employed to remove these contaminants from the air. As air flows through the filter, the filter blocks the passage of the contaminants, allowing contaminant free air to flow from the filter. A drawback to employing filters is that they simply block the passage of contaminants and do not destroy them. In addition, air filters are not effective to block carbon monoxide.

Titanium dioxide has been employed as a photocatalyst in an air purifier to destroy contaminants. When the titanium dioxide is illuminated with ultraviolet light, photons are absorbed b y the titanium dioxide, promoting an electron from the valence band to the conduction band, thus producing a hole in the valence band and adding an electron in the conduction band. The promoted electron reacts with oxygen, and the hole remaining in the valence band reacts with water, forming reactive hydroxyl radicals. When a contaminant adsorbs onto the titanium dioxide catalyst, the hydroxyl radicals attack and oxidize the contaminants to water, carbon dioxide, and other substances.

Doped or metal oxide treated titanium dioxide increases the effectiveness of the titanium dioxide photocatalyst. However, titanium dioxide and doped titanium dioxide are not effective in oxidizing carbon monoxide. Carbon monoxide (CO) is a colorless, odorless, and poisonous gas that is produced by the incomplete combustion of hydrocarbon fuels. Carbon monoxide is responsible for more deaths than any other poison and is especially dangerous in enclosed environments. Carbon monoxide results from the incomplete combustion of carbon based fuels such as kerosene, natural gas, gasoline, propane, butane, etc. and organic substances such as wood, paper, etc. Carbon monoxide can build up in indoor air due to improper ventilation, cigarette smoke, or automobile emissions in outdoor air. Carbon monoxide poisoning can occur in the presence of small quantities of carbon monoxide o ver long periods of time. Sensitive organs such as the brain, heart, and lungs suffer most from a lack of oxygen. The EPA mandated exposure over an eight hour average is set at 30 ppm.

Hence, there is a need for photocatalyst/thermocatalyst coating that oxidizes gaseous contaminants, including volatile organic compounds and carbon monoxide, that adsorb onto the photocatalytic surface to form carbon dioxide, water, and other substances.

US-A-6121191 and JP 2090924 disclose air purification systems as in the preamble to claim 1.

### SUMMARY OF THE INVENTION

The invention provides a system as set out in claim 1 and a method as set out in claim 9. A gold/titanium dioxide photocatalytic/thermocatalytic coating on a substrate purifies the air in a building or a vehicle by oxidizing any contaminants that adsorb onto the coating to water, carbon dioxide, and other substances. The particles of gold are nano-sized and have a size less than 3 nanometers.

A fan draws air into an air purification system. The air flows through an open passage or channel of a honeycomb. The surface of the honeycomb is coated with the gold/titanium coating. An ultraviolet light source positioned between successive honeycombs activates the gold/titanium dioxide coating.

When photons of the ultraviolet light are absorbed by the gold/titanium dioxide coating, reactive hydroxyl radicals are formed. When a contaminant, such as a volatile organic compounds, is adsorbed onto the gold/titanium dioxide coating, the hydroxyl radical attacks the contaminant, abstracting a hydrogen atom from the contaminant and oxidizing the volatile organic compounds to water, carbon dioxide, and other substances.

At room temperature, the gold/titanium dioxide coating oxidizes carbon monoxide to carbon dioxide simultaneously with oxidation of harmful volatile organic compounds. When carbon monoxide adsorbs on the coating, the gold acts as an oxidation catalyst and lowers the energy barrier of the carbon monoxide, oxidizing the carbon monoxide to carbon dioxide in the presence of oxygen. Additionally, the gold particles on the surface of the titanium dioxide reduce the recombination rate of the electrons and the holes, increasing the photocatalytic activity of the coating. The gold/titanium dioxide coating acts simultaneously as both a photocatalyst and a thermocatalyst.

The titanium dioxide is doped with a metal oxide to immobilize the gold particles on the surface of the titanium dioxide and prevent the gold particles from migrating which reduce the effectiveness of the photocatalyst/thermocatalyst. According to the invention, a dopant comprising at least one of WO₃, ZnO, CdS, SrTiO₃, Fe2O₃, V₂O₅, SnO₂, FeTiO₃, PbO, CeO₂, CuO, SiO₂, Al₂O₃, MnOₓ, Cr₂O₃, and ZrO₂ is loaded on the surface of the titanium dioxide for preventing migration of the gold particles on the surface of the titanium dioxide. These and other features of the present invention will be best understood from the following specification and drawings.

### BRIEF DESCRIPTION OF THE DRAWINGS

The various features and advantages of the invention will become apparent to those skilled in the art from the following detailed description of the currently preferred embodiment. The drawings that accompany the detailed description can be briefly described as follows:
Figure 1 schematically illustrates an enclosed environment, such as a building, vehicle or other structure, including an interior space and an HVAC system;
Figure 2 schematically illustrates the air purification system of the present invention; and
Figure 3 schematically illustrates the honeycomb of the air purification system.

### DETAILED DESCRIPTION OF THE PREFERRED EMBODIMENT

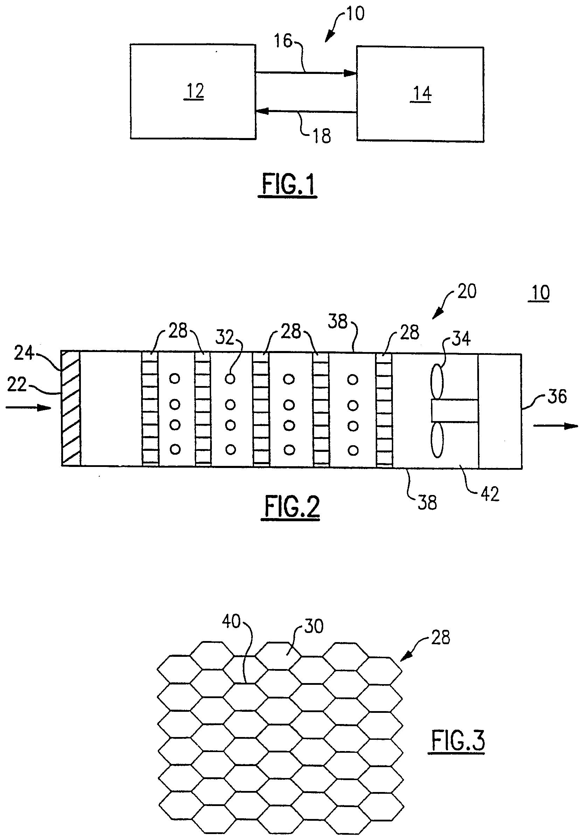

Figure 1 schematically illustrates a building, vehicle, or other structure 10 including an interior space 12, such as a room, an office or a vehicle cabin, such as a car, train, bus or aircraft. An HVAC system 14 heats or cools the interior space 12. Air in the interior space 12 is drawn by a path 16 into the HVAC system 14. The HVAC system 14 changes the temperature of the air drawn 16 from the interior space 12. If the HVAC system 14 is operating in a cooling mode, the air is cooled. Alternately, if the HVAC system 14 is operating in a heating mode, the air is heated. The air is then returned back by a path 18 to the interior space 12, changing the temperature of the air in the interior space 12.

Figure 2 schematically illustrates an air purification system 20 employed to purify the air in the building or vehicle 10 by oxidizing contaminants, such as volatile organic compounds, semi-volatile organic compounds and carbon monoxide, to water, carbon dioxide, and other substances. For example, the volatile organic compounds can be aldehydes, ketones, alcohols, aromatics, alkenes, or alkanes. The air purification system 20 can purify air before it is drawn along path 16 into the HVAC system 14 or it can purify air leaving the HVAC system 14 before it is blown along path 18 into the interior space 12 of the building or vehicle 10. The air purification system 20 can also be a stand alone unit that is not employed with a HVAC system 14.

A fan 34 draws air into the air purification system 20 through an inlet 22. The air flows through a particle filter 24 that filters out dust or any other large particles by blocking the flow of these particles. The air then flows through a substrate 28, such as a honeycomb. In one example, the honeycomb 28 is made of aluminum or an aluminum alloy. Figure 3 schematically illustrates a front view of the honeycomb 28 having a plurality of hexagonal open passages or channels 30. The surfaces of the plurality of open passages 30 are coated with a gold/titanium dioxide photocatalytic/thermocatalytic coating 40. When activated by ultraviolet light, the coating 40 oxidizes volatile organic compounds that adsorb onto the gold/titanium dioxide coating 40. As explained below, as air flows through the open passages 30 of the honeycomb 28, contaminants that are adsorbed on the surface of the gold/titanium dioxide coating 40 are oxidized into carbon dioxide, water and other substances.

A light source 32 positioned between successive honeycombs 28 activates the photocatalytic coating 40 on the surface of the open passages 30. As shown, the honeycombs 28 and the light source 32 alternate in the air purification system 20. That is, there is a light source 32 located between each of the honeycombs 28. Preferably, the light source 32 is an ultraviolet light source which generates light having a wavelength in the range of 180 nanometers to 400 nanometers.

The light source 32 is illuminated to activate the gold/titanium dioxide coating 40 on the surface of the honeycomb 28. When the photons of the ultraviolet light are absorbed by the gold/titanium dioxide coating 40, an electron is promoted from the valence band to the conduction band, producing a hole in the valence band. The gold/titanium dioxide coating 40 must be in the presence of oxygen and water to oxidize the contaminants into carbon dioxide, water, and other substances. The electrons that are promoted to the conduction band are captured by the oxygen. The holes in the valence band react with water molecules adsorbed on the gold/titanium dioxide coating 40 to form reactive hydroxyl radicals.

When a contaminant is adsorbed onto the coating 40, the hydroxyl radical attacks the contaminant, abstracting a hydrogen atom from the contaminant. In this method, the hydroxyl radical oxidizes the contaminants and produces water, carbon dioxide, and other substances.

The highly dispersed gold particles on the surface of the titanium dioxide reduce the recombination rate of the electrons and the holes, increasing the photocatalytic activity of the coating. In one example, the gold/titanium dioxide is found to increase the photocatalytic reaction rate of formaldehyde oxidation by about 40% over pure titanium dioxide. To achieve the photocatalytic improvement, the gold particles are nano-dispersed. The gold particles have a size less than 3 nanometers. For the thermocatalytic function, the size of the gold particles is also critical to the activity of the carbon monoxide oxidation, which is dependent on the gold being formed into very small nano-particles.

At room temperature, the gold/titanium dioxide coating 40 oxidizes carbon monoxide to carbon dioxide in the presence of oxygen simultaneously with the oxidation of harmful volatile organic compounds. When carbon monoxide adsorbs on the coating, the gold/titanium dioxide acts as a thermal oxidation catalyst and lowers the energy barrier of the carbon monoxide, oxidizing the carbon monoxide to carbon dioxide in the presence of oxygen. Titanium dioxide is an effective support for gold particles to be active for low temperature carbon monoxide oxidation. Therefore, the gold/titanium dioxide photocatalytic/thermocatalytic coating acts simultaneously as both a photocatalyst and a thermocatalyst.

Carbon monoxide oxidation occurs mainly on the perimeter interface of the gold particles. Carbon monoxide is adsorbed on either surface or perimeter sites of the gold to form carbonyl species. Oxygen is adsorbed on the gold/titanium dioxide surface. It is believed that the oxygen is adsorbed onto the perimeter interface. The carbonyl species on the perimeter sites react with the oxygen, forming an oxygen-gold-carbon monoxide complex. The complex is decomposed to produce carbon dioxide.

The support for the bifunctional catalyst is titanium dioxide. In one example, the titanium dioxide is Millennium titania, Degussa P-25, or an equivalent titanium dioxide.

The titanium dioxide is loaded with a metal oxide to further improve the photocatalytic and thermocatalytic effectiveness of the coating 40. Gold has a tendency to migrate on the surface of the titanium dioxide to form large clusters. The effectiveness of the gold/titanium dioxide coating 40 can be reduced due to the migration of gold particles. By loading a metal oxide on the surface of the titanium dioxide, the metal oxide can separate the gold particles and prevent them from migrating and forming large clusters, therefore increasing the effectiveness of the gold/titanium dioxide coating 40. According to the invention, a dopant comprising at least one of WO₃, ZnO, CdS, SrTiO₃, Fe₂O₃, V₂O₅, SnO₂, FeTiO_{3,} PbO, CeO₂, CuO, SiO₂, Al₂O₃, MnOₓ, Cr₂O₃, and ZrO₂ is loaded on the surface of the titanium dioxide for preventing migration of the gold particles on the surface of the titanium dioxide.

Additionally, nano-sized gold-containing mixed metal particles can be loaded on the titanium dioxide support. The metals can be one or more of silver, rhodium, ruthenium, palladium, iridium, osmium, platinum or rhenium.

After passing through the honeycombs 28, the purified air then exits the air purifier through an outlet 36. The walls 38 of the air purification system 20 are preferably lined with a reflective material 42. The reflective material 42 reflects the ultraviolet light onto the surface of the open passages 30 of the honeycomb 28.

The catalytic performance of a gold/titanium dioxide coating is influenced by the p reparation method. The catalytic activity of gold is dependent on the gold being formed into nano-particles. The nano-particles of gold can be generated by any method, including co-precipitation, deposition-precipitation, liquid phase grafting, colloidal mixing, impregnation, or chemical vapor deposition.

In the co-precipitation method, a catalyst is prepared by mixing an aqueous solution of gold precursor and an aqueous solution of titanium precursor at room temperature or at a slightly elevated temperature and at a constant pH. The precipitate is filtered and washed thoroughly with distilled water and is dried at 70°C under vacuum overnight. After drying, the product is calcined at a range of 200°C to 500°C form a dried gold/titanium dioxide photocatalyst/thermocatalyst.

In the deposition-precipitation method, titanium dioxide powder is suspended in distilled water a desired amount of HAuCl₄. Urea is added slowly to the mixture, and the mixture is then heated to 80° to 90°C, decomposing the urea to release NH₄OH (ammonium hydroxide) and carbon dioxide, thus increasing the pH of the mixture. The slow increase in pH induces homogeneous precipitation of Au(OH)₃ onto the surface of the titanium dioxide. The sample is washed thoroughly in distilled water to remove residual chloride ions. The sample is then dried at 70°C under vacuum overnight. The sample is then calcined at temperatures from 200°C to 500°C to form a dried gold/titanium dioxide photocatalyst/thermocatalyst. An advantage to the deposition-precipitation method is that all of the active components remain on the surface of the titanium dioxide support and are not buried within it.

In liquid phase grafting method, a gold complex in solution reacts with the surface of a support, such as titanium dioxide, forming species convertible to a catalytically active form. Me₂Au can be used as a gold precursor. The precursor is dissolved into acetone and then titanium dioxide is added to the solvent. This mixture is allowed to settle so that the gold precursor adsorbs onto the metal oxide surface. The mixture is then filtered and calcined at 400°C for 4 hours.

To coat the bifunctional catalyst on the honeycomb 28, water is added to the dried gold/titanium dioxide photocatalyst/thermocatalyst to form a suspension. The suspension is applied to the surface of the honeycomb 28 by spraying, electrophoresis, or dip coating to form the gold/titanium dioxide coating 40. After the suspension is applied, the suspension is allowed to dry, forming a uniform gold/titanium dioxide coating 40 on the honeycomb 28.

Although a honeycomb 28 has been illustrated and described, it is to be understood that the gold/titanium dioxide coating 40 can be applied on any structure. The voids in a honeycomb 28 are typically hexagonal in shape, but it is to be understood that other void shapes can be employed. As contaminants adsorb onto the gold/titanium dioxide coating 40 of the structure in the presence of a light source, the contaminants are oxidized into water, carbon dioxide and other substances.

## Claims

1. An air purification system comprising:
a substrate (28);
a gold/titanium dioxide coating (40) applied on said substrate (28), said gold/titanium dioxide coating including nano-sized gold particles on titanium dioxide, said nano-sized particles having a size less than 3 nanometers; and
a light source (32) to activate said gold/titanium dioxide coating (40),
wherein said gold/titanium dioxide coating (40) oxidizes contaminants that are adsorbed onto said gold/titanium dioxide coating (40) when activated by said light source,
**characterised in that**:
said gold/titanium dioxide coating (40) includes a dopant loaded on the surface of the titanium dioxide for preventing migration of the gold particles on the surface of the titanium dioxide, said dopant comprising at least one of WO₃, ZnO, CdS, SrTiO₃, Fe₂O₃, V₂O₅, SnO₂, FeTiO₃, PbO, CeO₂, CuO, SiO₂, Al₂O₃, MnOₓ, Cr₂O₃, and ZrO₂.

2. The air purification system as recited in claim 1, wherein said light source (32) is an ultraviolet light source.

3. The air purification system as recited in claim 1 or 2, wherein said gold/titanium dioxide coating (40) is arranged to absorb photons from said light source (32) in order to form a reactive hydroxyl radical for oxidizing the contaminants in the presence of oxygen and water to form water and carbon dioxide.

4. The air purification system as recited in any preceding claim, wherein said contaminants are one of a volatile organic compound and a semi-volatile organic compound including at least one of aldehyde, ketone, alcohol, aromatic, alkene, and alkane.

5. The air purification system as recited in any preceding claim, wherein said substrate (28) is an array of voids separated by a solid wall.

6. The air purification system as recited in any preceding claim, further including a housing, the air purification system is in said housing, and walls of said housing are lined with a reflective material.

7. The air purification system as recited in claim 1 comprising:
a container having an inlet (22) and an outlet (36) and containing the substrate (28), wherein the substrate (28) is a porous substrate;
a device for drawing a fluid into said container through said inlet (22), flowing said fluid through said porous substrate (28), and expelling said fluid out of said container through said outlet (36).

8. The air purification system as recited in any preceding claim, wherein said substrate (28) is a honeycomb.

9. A method of purifying air comprising the steps of:
applying a gold/titanium dioxide catalytic coating (40) on a substrate (28), said gold/titanium dioxide coating (40) including nano-sized gold particles on titanium dioxide, said nano-sized gold particles having a size less than 3 nanometers, and a dopant loaded on the surface of the titanium dioxide for preventing migration of the gold particles on the surface of the titanium dioxide, said dopant comprising at least one of WO₃, ZnO, CdS, SrTiO₃, Fe₂O₃, V₂O₅, SnO₂, FeTiO₃, PbO, CeO₂, CuO, SiO₂, Al₂O₃, MnOₓ, Cr₂O₃, and ZrO₂;
activating said gold/titanium dioxide catalytic coating (40), illuminated by UV light and in the presence of oxygen and water, to form a reactive hydroxyl radical;
adsorbing contaminants onto said gold/titanium dioxide catalytic coating (40); and
oxidizing said contaminants.

## Patentansprüche

1. Luftreinigungssystem, umfassend:
ein Substrat (28);
eine auf das Substrat (28) aufgebrachte Gold-/Titandioxidbeschichtung (40), wobei die Gold-/Titandioxidbeschichtung Goldpartikel in Nanogröße auf Titandioxid umfasst, wobei die Partikel in Nanogröße eine Größe von weniger als 3 Nanometer haben; und
eine Lichtquelle (32) zum Aktivieren der Gold-/Titandioxidbeschichtung (40), wobei die Gold-/Titandioxidbeschichtung (40) Schadstoffe oxidiert, die bei Aktivierung durch die Lichtquelle auf der Gold-/Titandioxidbeschichtung (40) absorbiert werden;
**dadurch gekennzeichnet, dass**:
die Gold-/Titandioxidbeschichtung (40) einen auf die Oberfläche des Titandioxids geladenen Dotierstoff umfasst, der die Migration der Goldpartikel auf die Oberfläche des Titandioxids verhindert, wobei der Dotierstoff mindestens eines von WO₃, ZnO, CdS, SrTiO₃, Fe₂O₃, V₂O₅, SnO₂, FeTiO₃, PbO, CeO₂, CuO, SiO₂, Al₂O₃, MnOₓ, Cr₂O₃ und ZrO₂ umfasst.

2. Luftreinigungssystem nach Anspruch 1, wobei die Lichtquelle (32) eine ultraviolette Lichtquelle ist.

3. Luftreinigungssystem nach Anspruch 1 oder 2, wobei die Gold-/Titandioxidbeschichtung (40) angeordnet ist, um Photonen von der Lichtquelle (32) zu absorbieren, um ein reaktives Hydroxyl-Radikal zum Oxidieren der Schadstoffe im Beisein von Sauerstoff und Wasser zu bilden, so dass Wasser und Kohlendioxid entsteht.

4. Luftreinigungssystem nach einem beliebigen der vorstehenden Ansprüche, wobei die Schadstoffe eine von einer flüchtigen organischen Verbindung oder einer halbflüchtigen organischen Verbindung sind, die mindestens eines von Aldehyd, Keton, Alkohol, Aroma, Alken und Alkan umfasst.

5. Luftreinigungssystem nach einem beliebigen der vorstehenden Ansprüche, wobei das Substrat (28) eine Anordnung von Hohlräumen ist, die durch eine massive Wand getrennt sind.

6. Luftreinigungssystem nach einem beliebigen der vorstehenden Ansprüche, ferner umfassend ein Gehäuse, wobei das Luftreinigungssystem sich in dem Gehäuse befindet und die Wände des Gehäuses mit einem reflektierendem Material ausgekleidet sind.

7. Luftreinigungssystem nach Anspruch 1, umfassend:
einen Behälter mit einem Einlass (22) und einem Auslass (36) und ein Substrat beinhaltend (28), wobei das Substrat (28) ein poröses Substrat ist;
eine Vorrichtung zum Ziehen von Flüssigkeit über den Einlass (22) in den Behälter, wobei die Flüssigkeit durch das poröse Substrat (28) fließt und die Flüssigkeit durch den Auslass (36) aus dem Behälter ausgestoßen wird.

8. Luftreinigungssystem nach einem beliebigen der vorstehenden Ansprüche, wobei das Substrat (28) eine Wabe ist.

9. Verfahren zum Reinigen von Luft, umfassend folgende Schritte:
Aufbringen einer katalytischen Gold-/Titandioxidbeschichtung (40) auf ein Substrat (28), wobei die Gold-/Titandioxidbeschichtung (40) Goldpartikel in Nanogröße auf Titandioxid umfasst, wobei die Goldpartikel in Nanogröße eine Größe von weniger als 3 Nanometer und einen auf die Oberfläche des Titandioxids geladenen Dotierstoff haben, der die Migration der Goldpartikel auf die Oberfläche des Titandioxids verhindert, wobei der Dotierstoff mindestens eines von WO₃, ZnO, CdS, SrTiO₃, Fe₂O₃, V₂O₅, SnO₂, FeTiO₃, PbO, CeO₂, CuO, SiO₂, Al₂O₃, MnOₓ, Cr₂O₃ und ZrO₂ umfasst;
Aktivieren der katalytischen Gold-/Titandioxidbeschichtung (40), um bei Beleuchtung mit UV-Licht und im Beisein von Sauerstoff und Wasser ein reaktives Hydroxyl-Radikal zu bilden;
Absorbieren der Schadstoffe auf der katalytischen Gold-/Titandioxidbeschichtung (40); und
Oxidieren der Schadstoffe.

## Revendications

1. Système d'épuration d'air comprenant :
un substrat (28) ;
un revêtement d'or/oxyde de titane (40) appliqué sur ledit substrat (28), ledit revêtement d'or/oxyde de titane incluant des nanoparticules d'or sur de l'oxyde de titane, lesdites nanoparticules ayant une taille inférieure à 3 nanomètres ; et
une source de lumière (32) pour activer ledit revêtement d'or/oxyde de titane (40),
dans lequel ledit revêtement d'or/oxyde de titane (40) oxyde les contaminants qui sont adsorbés sur ledit revêtement d'or/oxyde de titane (40) lorsqu'il est activé par ladite source de lumière,
**caractérisé en ce que** :
ledit revêtement d'or/oxyde de titane (40) inclut un dopant chargé sur la surface de l'oxyde de titane pour empêcher la migration des particules d'or sur la surface de l'oxyde de titane, ledit dopant comprenant au moins un parmi WO₃, ZnO, CdS, SrTiO₃, Fe₂O₃, V₂O₅, SnO₂, FeTiO₃, PbO, CeO₂, CuO, SiO₂, Al₂O₃, MnOₓ, Cr₂O₃, et ZrO₂.

2. Système d'épuration d'air selon la revendication 1, dans lequel ladite source de lumière (32) est une source de lumière ultraviolette.

3. Système d'épuration d'air selon la revendication 1 ou 2, dans lequel ledit revêtement d'or/de l'oxyde de titane (40) est agencé de façon à absorber des photons de ladite source de lumière (32) afin de former un radical hydroxyle réactif pour oxyder les contaminants en présence d'oxygène et d'eau pour former de l'eau et de l'oxyde de carbone.

4. Système d'épuration d'air selon une quelconque revendication précédente, dans lequel lesdits contaminants sont un parmi un composé organique volatil et un composé organique semi-volatil incluant au moins un parmi un aldéhyde, une cétone, un alcool, un composé aromatique, un alcène et un alcane.

5. Système d'épuration d'air selon une quelconque revendication précédente, dans lequel ledit substrat (28) est une série de vides séparés par une paroi solide.

6. Système d'épuration d'air selon une quelconque revendication précédente, incluant en outre un logement, le système d'épuration d'air est dans ledit logement, et des parois dudit logement sont tapissées d'un matériau réfléchissant.

7. Système d'épuration d'air selon la revendication 1, comprenant :
un contenant ayant une entrée (22) et une sortie (36) et contenant le substrat (28), dans lequel le substrat (28) est une membrane poreuse ;
un dispositif pour retirer un fluide dans ledit contenant par ladite entrée (22), faire écouler ledit fluide par ledit substrat poreux (28), et évacuer ledit fluide hors dudit contenant par ladite sortie (36).

8. Système d'épuration d'air selon une quelconque revendication précédente, dans lequel ledit substrat (28) est un nid d'abeilles.

9. Procédé d'épuration d'air comprenant les étapes :
d'application d'un revêtement catalytique d'or/oxyde de titane (40) sur un substrat (28), ledit revêtement d'or/oxyde de titane (40) incluant des nanoparticules d'or sur du dioxyde de titane, lesdites nanoparticules d'or ayant une taille inférieure à 3 nanomètres ; et un dopant chargé sur la surface de l'oxyde de titane pour empêcher la migration des particules d'or sur la surface de l'oxyde de titane, ledit dopant comprenant au moins un parmi WO₃, ZnO, CdS, SrTiO₃, Fe₂O₃, V₂O₅, SnO₂, FeTiO₃, PbO, CeO₂, CuO, SiO₂, Al₂O₃, MnOₓ, Cr₂O₃, et ZrO₂ ;
d'activation dudit revêtement catalytique d'or/oxyde de titane (40), éclairé par une lumière UV et en présence d'oxygène et d'eau, pour former un radical hydroxyle réactif ;
d'adsorption des contaminants sur ledit revêtement catalytique d'or/oxyde de titane (40) ; et
d'oxydation desdits contaminants.
